# EUROPEAN PATENT SPECIFICATION

(11) **EP 1 871 823 B1**
(45) Date of publication and mention of the grant of the patent: **27.03.2013**
(21) Application number: 06747392.6
(22) Date of filing: 20.04.2006
(51) Int. Cl.: C08G 73/06

(54) **POLYMER CAPSULE AND PROCESS FOR THE PREPARATION THEREOF**
POLYMERKAPSEL UND HERSTELLUNGSVERFAHREN DAFÜR
CAPSULE POLYMERE ET SON PROCEDE D'ELABORATION

(30) Priority: 21.04.2005 KR 20050033208
(43) Date of publication of application: 02.01.2008
(73) Proprietor: Postech Foundation, Pohang-City, Kyungsangbuk-do 790-784 (KR); Postech Academy-Industry- Foundation, Pohang-city, Kyungsangbuk-do 790-784 (KR)
(72) Inventor: KIM, Kimoon, Pohang-city, Kyungsangbuk-do 790-784 (KR); KIM, Dongwoo, Dept.of Chemistry, Pohang-city, Kyungsangbuk-do 790-784 (KR); KIM, Eunju Dept. of Chemistry, Pohang-city, Kyungsangbuk-do 790-784 (KR); KIM, Jeeyeon Dept of Chemistry, Pohang-city, Kyungsangbuk-do 790-784 (KR); KO, Young-Ho Dept. of Chemistry, Pohang-city, Kyungsangbuk-do 790-784 (KR)
(74) Representative: Ilgart, Jean-Christophe
(86) International application number: PCT/KR2006/001482
(87) International publication number: WO 2006/112673

(56) References cited:
- EP-A2- 1 094 065
- JP-A- 2001 122 877
- KR-A- 2005 013 019
- US-A1- 2005 075 498
- US-B2- 6 869 466
- BLANCH ET AL: "Cucurbit[7]uril and o-carborane self-assembly to form a molecular ball bearing", NANO LETTERS, ACS, US, vol. 2, no. 2, 1 February 2002 (2002-02-01), pages 147-149, XP003012080, ISSN: 1530-6984, DOI: 10.1021/NL015655S [retrieved on 2001-12-06]

## Description

### TECHNICAL FIELD

The present invention relates to polymer capsules and methods of preparing the same. More particularly, the present invention relates to polymer capsules having a diameter of 10 to 1,000 nm which are prepared by copolymerization of a cucurbituril derivative with an organic compound, and methods of preparing the same.

### BACKGROUND ART

Polymer capsules are polymer materials having hollow spaces inside them and can encapsulate macromolecules such as proteins or DNAs as well as micromolecules. Thus, polymer capsules have been applied as nanoreactors, drug delivery systems, etc. [Langer, R. Adv. Drug Delivery Rev. 2001, 46, 125]. In particular, many studies about applications of various polymer capsules prepared by a self-assembly method [J. Am. Chem. Soc. 1999, 121, 3805], an emulsion polymerization method [Chem. Comm. 2004, 794], a templating method [Adv, Mater. 2001, 13, 11], etc. have been conducted. Among these polymer capsules, polymer capsules having a cross-linkage network exhibit high stability such that their characteristics can be maintained stably even under an external environmental change, and thus, much attention has been paid to studies of applications of them as drug delivery systems. However, the preparation of polymer capsules and the introduction of targeting molecules interacting with various biomolecules onto surfaces of the polymer capsules take too much time and efforts, which restricts studies for elucidation of the mechanism of a drug delivery using polymer capsules. Thus, it is necessary to develop a method of easily preparing a polymer capsule and a method of easily introducing a targeting molecule interacting with a biomolecule onto a surface of the polymer capsule. Based on the preparation method of the polymer capsule and the introduction method of the targeting molecule onto the polymer capsule, it is necessary to conduct studies about the development of stable *in vivo* drug delivery systems.

Cucurbiturils were first reported by R. Behrend, E. Meyer, and F. Rusche in 1905 [Liebigs Ann. Chem. 1905, 339, 1]. According to their report, the condensation of glycoluril and excess formaldehyde in the presence of hydrochloric acid (HCl) produces an amorphous precipitate. Dissolution of the amorphous precipitate in hot concentrated sulfuric acid and then dilution of the resultant solution with water produce a crystalline substance. However, they wrongly characterized this substance as C₁₀HₙN₇O₄ 2H₂O without revealing the structure of this substance.

In 1981, W. Mock and coworkers correctly characterized this substance as a hexameric macrocyclic compound with the composition of C₃₆H₃₆N₂₄O₁₂, and determined its crystal structure by X-ray diffraction [J. Am. Chem. Soc. 1981, 103, 7367]. They named it cucurbit[6]uril. Since then, an improved synthetic method of cucurbit[6]uril has been disclosed (DE 196 03 377 A1).

In 2000, Ki-Moon Kim and coworkers reported the improved preparation and separation of the well-known cucurbit[6]uril and its homologues, cucurbit[n]urils (n = 5, 7, 8), and identified their X-ray crystal structures [J. Am. Chem. Soc. 2000, 122, 540].

Meanwhile, PCT International Publication WO 00/68232 discloses cucurbit[n]uril represented by Reference Diagram 1 below: 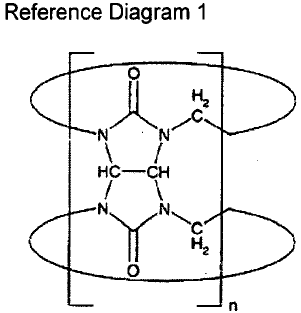 wherein n is an integer of 4 to 12.

The above-described cucurbituril derivatives are compounds composed of unsubstituted glycoluril monomer units. Cucurbituril derivatives composed of substituted glycoluril monomer units have also been disclosed [Angew, Chem. Int. Ed. Engl. 1992, 31, 1475]. According to this document, decamethylcucurbit[5]uril in which five dimethanodimethylglycoluril monomer units form a ring through a condensation reaction between dimethylglycoluril and formaldehyde.

Cucurbiturils are macrocyclic compounds having a lipophilic cavity and two hydrophilic entrances at upper and lower portions. In this respect, lipophilic interactions occur in the cavity of cucurbiturils, and hydrogen bonds, polar-polar interactions, and positive charge-polar interactions occur in the two entrances having six carbonyl groups. Therefore, cucurbiturils have inclusion capacity for various compounds by a very stable non-covalent linkage with these compounds. Cucurbiturils form a very stable non-covalent complex, in particular, with compounds having a functional group such as an amino group or a carboxyl group. Based on such characteristics, studies about various applications of cucurbiturils have been continuously conducted.

Recently, the present inventors reported an exemplary application of cucurbituril as a drug delivery system by forming a stable non-covalent complex of oxaliplatin approved as an anticancer agent by the Food Drug Administration (FDA) with cucurbituril (PCT/KR02/01755). Furthermore, the present inventors reported an enhancement of DNA binding activity by cucurbituril-based pseudo-rotaxane, and studied and reported an application of a dendrimer using cucurbituril as a gene delivery system [KR01-7269, Angew. Chem. Int. Ed., 2000 and 2001].

In addition, the present inventors found that cucurbituril was a host molecule having a cavity inside it and thus could easily form a host-guest molecule complex by a non-covalent linkage with a guest molecule [Acc. Chem. Res. 2003, 36, 621]. Thus, it is anticipated that cucurbituril can be used as a drug delivery system for a drug capable of forming a non-covalent complex with the cucurbituril, i.e., both for a single-molecule drug having an amine group, an ammonium group, or a carboxyl group, and a protein or polypeptide drug. However, cucurbituril has a low solubility and no active functional groups that can be easily substituted by various substituents, and thus, its utilization is extremely limited. For this reason, cucurbituril is subsidiary to cyclodextrin which is an existing promising drug delivery system. In spite of very excellent retention capacity of cucurbituril, practical studies about utilization of cucurbituril as a drug delivery system have not been conducted.

Recently, while searching for solutions to overcome the limitations in use of cucurbituril as a drug delivery system, the present inventors developed hydroxycucurbituril in which an active substituent is introduced to cucurbituril that has limited applications [see Reference Diagram 2: Korean Patent Laid-Open Publication No. 2003-60053, PCT/KR02/02213]. 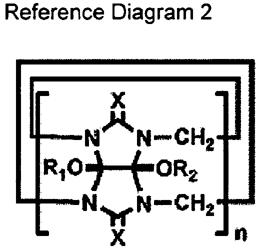
wherein R₁ and R₂ are each independently hydrogen, a methyl group, a butyl group, a dodecabutyl group, an allyl group, a propynyl group, a hydroxyethyl group, a C₁-C₃₀ alkyloxycarbonyl group, a C₁-C₃₀ alkylcarbonyl group, a C₁-C₃₀ aminoalkyl group, -C(=O)CH₃, -CH₂CH₂CH₂SCH₂COOH, -CH₂CH₂CH₂SCH₂CH₂NH₂, or -C(=O)CH₂CH₂CH₂CH₂ CH₂CH₂CH₂CH₂CH₂CH₂CH₃-,
X is O, S, or NH; and
n is an integer of 4 to 20.

Various functional groups can be easily introduced into the above-described hydroxycucurbituril, which enables the synthesis of various cucurbituril derivatives.

In addition, the present inventors studied and reported a drug or gene delivery system using a liposome prepared from a cucurbituril derivative (Korean Patent Application No. 2004-27577).

Therefore, under the necessity of development of new drug delivery systems, the present inventors completed a polymer capsule-based drug delivery system based on the above-described non-covalent binding properties of cucurbiturils and cucurbituril derivatives in which various functional groups can be introduced.

### DESCRIPTION OF THE DRAWINGS

FIG. 1 is a Scanning Electron Microscopic (SEM) image showing a polymer capsule prepared by copolymerization of allyloxycucurbit[12]uril with 1,3-dioxa-2,8-octanedithiol; and
FIG. 2 is a diagram illustrating a pharmacologically active substance-encapsulating polymer capsule which is surface-modified with a targeting compound.

### DETAILED DESCRIPTION OF THE INVENTION

### TECHNICAL PROBLEM

The present invention provides a polymer capsule prepared from a cucurbituril derivative.

The present invention also provides a polymer capsule prepared from a cucurbituril derivative in which a targeting compound is included.

The present invention also provides a polymer capsule encapsulating a pharmacologically active substance.

The present invention also provides methods of preparing the polymer capsules.

### TECHNICAL SOLUTION

According to an aspect of the present invention, there is provided a polymer capsule having a diameter of 10 to 1,000 nm which is prepared by copolymerization of a cucurbituril derivative represented by Formula 1 below with an organic compound represented by Formula 2 below: 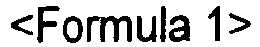 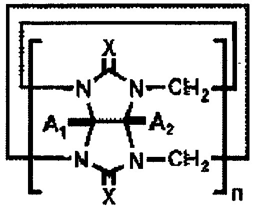 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂S CH₂COOH, -OCH₂CH₂CH₂SCH₂CH₂NH₂, and -OC(=O)CH₂CH₂CH₂CH₂CH₂CH₂CH₂CH₂ CH₂CH₂CH₃, or is -O-A-CH=CH₂ where A is C₁-C₂₀ alkylene in which oxygen, sulfur, or nitrogen may be inserted into a carbon-carbon bond of the alkylene;
X is O, S, or NH; and
n is an integer of 4 to 20, and

<Formula 2> (HS)ⱼ-Z-(SH)ₖ

wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃, and C(CH₂OOCCH₂ CH₂SH)₄, and in which oxygen, sulfur, or nitrogen may be inserted into a carbon-carbon bond of the alkylene; and
j and k are each independently an integer of 1 to 3.

The polymer capsule of the present invention may be a polymer capsule prepared by photopolymerization of a compound of Formula 1 having 6-12 allyl (-CH₂-CH=CH₂) groups with a compound of Formula 2 having two or more thiol groups. The photopolymerization is a reaction known as thiol-ene photopolymerization [Macromolecules 2002, 35, 5361; Macromolecules 2003, 36, 4631].

The polymer capsule may be surface-modified with a targeting compound. That is, a targeting compound may be included in an intramolecular cavity of a cucurbituril derivative part constituting the polymer capsule so that a targeting moiety of the targeting compound is exposed outside the polymer capsule.

A pharmacologically active substance may be encapsulated as a guest molecule in the polymer capsule or the polymer capsule surface-modified with the targeting compound.

According to another aspect of the present invention, there is provided a method of preparing a polymer capsule having a diameter of 10 to 1,000 nm using copolymerization of a cucurbituril derivative of Formula 1 with an organic compound of Formula 2, the method including:
dissolving a cucurbituril derivative of Formula 1 and an organic compound of Formula 2 in an organic solvent to obtain a reaction solution;
performing copolymerization of the cucurbituril derivative of Formula 1 with the organic compound of Formula 2 in the reaction solution to obtain a polymer capsule; and
removing an unreacted residual compound by dialysis.

According to still another aspect of the present invention, there is provided a method of preparing a polymer capsule having a diameter of 10 to 1,000 nm, in which a targeting compound is included in an intramolecular cavity of a cucurbituril derivative part constituting the polymer capsule, using copolymerization of a cucurbituril derivative of Formula 1 with an organic compound of Formula 2, the method including:
dissolving a cucurbituril derivative of Formula 1 and an organic compound of Formula 2 in an organic solvent to obtain a reaction solution;
performing copolymerization of the cucurbituril derivative of Formula 1 with the organic compound of Formula 2 in the reaction solution to obtain a solution containing a polymer capsule;
adding a targeting compound or a targeting compound-containing solution to the polymer capsule-containing solution so that the targeting compound is included in an intramolecular cavity of a cucurbituril derivative part constituting the polymer capsule; and
removing an unreacted residual compound by dialysis.

According to yet another aspect of the present invention, there is provided a method of preparing a polymer capsule having a diameter of 10 to 1,000 nm and encapsulating a pharmacologically active substance as a guest molecule using copolymerization of a cucurbituril derivative of Formula 1 with an organic compound of Formula 2, the method including:
dissolving a cucurbituril derivative of Formula 1, an organic compound of Formula 2, and a pharmacologically active substance in an organic solvent to obtain a reaction solution;
performing copolymerization of the cucurbituril derivative of Formula 1 with the organic compound of Formula 2 in the reaction solution to obtain a pharmacologically active substance-encapsulating polymer capsule; and
removing an unreacted residual compound by dialysis.

According to a further aspect of the present invention, there is provided a method of preparing a polymer capsule having a diameter of 10 to 1,000 nm and encapsulating a pharmacologically active substance as a guest molecule, in which a targeting compound is included in an intramolecular cavity of a cucurbituril derivative part constituting the polymer capsule, using copolymerization of a cucurbituril derivative of Formula 1 with an organic compound of Formula 2, the method including:
dissolving a cucurbituril derivative of Formula 1, an organic compound of Formula 2, and a pharmacologically active substance in an organic solvent to obtain a reaction solution;
performing copolymerization of the cucurbituril derivative of Formula 1 with the organic compound of Formula 2 in the reaction solution to obtain a solution containing a pharmacologically active substance-encapsulating polymer capsule;
adding a targeting compound or a targeting compound-containing solution to the pharmacologically active substance-encapsulating polymer capsule-containing solution so that the targeting compound is included in an intramolecular cavity of a cucurbituril derivative part constituting the polymer capsule; and
removing an unreacted residual compound by dialysis.

Hereinafter, the present invention will be described in detail with reference to the accompanying drawings.

The present invention provides a polymer capsule having a diameter of 10 to 1,000 nm which is prepared by copolymerization of a cucurbituril derivative represented by Formula 1 below with an organic compound having two or more thiol groups: 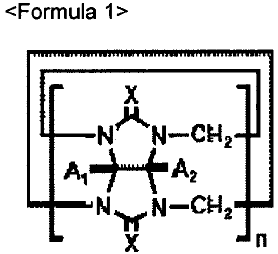 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂ CH₂SCH₂COOH, -OCH₂CH₂CH₂SCH₂CH₂NH₂, and -OC(=O)CH₂CH₂CH₂CH₂CH₂CH₂ CH₂CH₂CH₂CH₂CH₃, or is -O-A-CH=CH₂ where A is C₁₋C₂₀ alkylene in which oxygen, sulfur, or nitrogen may be inserted into a carbon-carbon bond of the alkylene;
X is O, S, or NH; and
n is an integer of 4 to 20.

The cucurbituril derivative of Formula 1 may be a compound having 6-12 allyl groups.

The organic compound forming the polymer capsule by copolymerization with the cucurbituril derivative of Formula 1 may be a compound having two or more thiol groups and capable of copolymerizing with the cucurbituril derivative of Formula 1, specifically, a compound represented by Formula 2 below:

<Formula 2> (HS)ⱼ-Z-(SH)ₖ

wherein,
Z is C₁₋C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂ (OH)CH₂(OH)CH₂SH, CH₃CH₂C(CH₂OOCCH₂CH₂SH)₃, and C(CH₂OOCCH₂CH₂SH)₄, and in which oxygen, sulfur, or nitrogen may be inserted into a carbon-carbon bond of the alkylene; and
j and k are each independently an integer of 1 to 3.

The compound of Formula 2 may be a compound selected from the group consisting of 1,8-octanedithiol, 3,6-dioxa-1,8-octanedithiol, pentaerythritol tetrakis (3-mercaptopropionate), trimethylolpropane tri(3-mercaptopropionate), and a combination thereof, but the present invention is not limited to the illustrated examples.

The polymer capsule of the present invention may be surface-modified with a targeting compound. In detail, the polymer capsule of the present invention may be surface-modified by including the targeting compound in an intramolecular cavity of a cucurbituril derivative part constituting the polymer capsule. Preferably, the targeting compound is included in the intramolecular cavity of the cucurbituril derivative part constituting the polymer capsule so that a targeting moiety of the targeting compound is exposed outside the polymer capsule.

Thus, according to an embodiment of the present invention, there is provided a polymer capsule having a diameter of 10 to 1,000 nm which is prepared by copolymerization of a cucurbituril derivative of Formula 1 with an organic compound of Formula 2, in which a targeting compound is included in an intramolecular cavity of a cucurbituril derivative part constituting the polymer capsule so that a targeting moiety of the targeting compound is exposed outside the polymer capsule.

The targeting compound used as a surface modifier of the polymer capsule may be a compound represented by Formula 3 below. However, the targeting compound is not limited provided that it has a targeting property and can be included in an intramolecular cavity of a cucurbituril derivative part constituting the polymer capsule so that its targeting moiety is exposed outside the polymer capsule:

<Formula 3> A-B-T

wherein,
A is 1,3-diaminopropyl, 1,4-diaminobutyl, 1,5-diaminopentyl, 1,6-diaminohexyl, sperminyl, spermidinyl, propylamino, butylamino, pentylamino, hexylamino, biologenyl, pyridinyl, ferrocenyl, or an amino acid;
B is hydrogen, C₁-C₃₀ alkyl, C₁-C₃₀ alkenyl, C₁-C₃₀ alkynyl, C₂-C₃₀ carbonylalkyl, C₁-C₃₀ thioalkyl, C₁-C₃₀ alkylsulfanyl, C₁-C₃₀ alkyloxy, C₁-C₃₀ hydroxyalkyl, C₁-C₃₀ alkylsilyl, C₁-C₃₀ aminoalkyl, C₁-C₃₀ aminoalkylthioalkyl, C₅-C₃₀ cycloalkyl, C₂-C₃₀ heterocycloalkyl, C₆-C₃₀ aryl, C₆-C₂₀ arylalkyl, C₄-C₃₀ heteroaryl, or C₄-C₂₀ heteroarylalkyl; and
T is a targeting moiety selected from the group consisting of sugar, polypeptide, protein, and gene.
In the compound of Formula 3, the sugar used as the targeting moiety may be glucose, mannose, or galactose, but the present invention is not limited thereto. The protein used as the targeting moiety may be lectin, selectin, or transferrin, but the present invention is not limited thereto.

The inclusion of the targeting compound of Formula 3 in the intramolecular cavity of the cucurbituril derivative part on a surface of the polymer capsule may be represented by Reference Diagram 3 below:

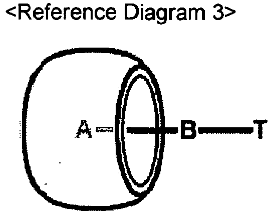

In the compound of Formula 3, A is a substance capable of being easily included in an intramolecular cavity of a cucurbituril derivative. That is, when the polymer capsule is prepared from the cucurbituril derivative of Formula 1, the substance A is designed to be easily included in an intramolecular cavity of a cucurbituril derivative part exposed on a surface of the polymer capsule. Based on this strategy, as shown in Reference Diagram 3, the polymer capsule may be surface-modified with the targeting moiety T connected to the substance A via the linker B.

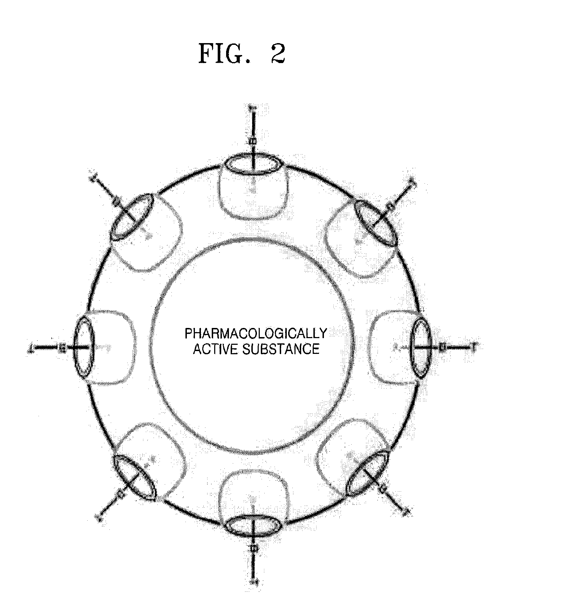

Meanwhile, the unmodified polymer capsule prepared by copolymerization of the cucurbituril derivative of Formula 1 with the organic compound of Formula 2 and the surface-modified polymer capsule wherein the targeting compound is accommodated in a surface of the unmodified polymer capsule can be used as a carrier for a pharmacologically active substance. These polymer capsules can encapsulate a pharmacologically active substance as a guest molecule in their hollow spaces. In particular, a drug encapsulated in the polymer capsule surface-modified with the targeting compound can specifically act on an *in vivo* target site. Thus, side effects that may be caused by action of a drug on an unwanted site can be prevented. A pharmacologically active substance-encapsulating polymer capsule which is surface-modified with a targeting compound as represented by Formula 3 is diagrammatically illustrated in FIG. 2.

The pharmacologically active substance that can be encapsulated in the polymer capsule is not particularly limited provided that it has pharmacological activity and can be dissolved or dispersed in a solvent used in the preparation of the polymer capsule. For example, the pharmacologically active substance may be an organic compound, a protein, a gene, etc.

Examples of the organic compound used as the pharmacologically active substance include, but are not limited to, hydrocortisone, prednisolone, spironolactone, testosterone, megesterol acetate, danasole, progesterone, indomethacine, amphotericin B, and a combination thereof.

Examples of the protein used as the pharmacologically active substance include, but are not limited to, human growth hormone, G-CSF (granulocyte colony-stimulating factor), GM-CSF (granulocyte-macrophage colony-stimulating factor), erythropoietin, vaccine, antibody, insulin, glucagon, calcitonin, ACTH (adrenocorticotropic hormone), somatostatin, somatotropin, somatomedin, parathormone, thyroid hormone, hypothalamus secretion, prolactin, endorphin, VEGF (vascular endothelial growth factor), enkephalin, vasopressin, nerve growth factor, non-naturally occurring opioid, interferon, asparaginase, alginase, superoxide dismutase, trypsin, chymotrypsin, pepsin, and a combination thereof.

The present invention also provides a method of preparing a polymer capsule having a diameter of 10 to 1,000 nm using copolymerization of a cucurbituril derivative of Formula 1 with an organic compound of Formula 2, the method including:
dissolving a cucurbituril derivative of Formula 1 and an organic compound of Formula 2 in an organic solvent to obtain a reaction solution;
performing copolymerization of the cucurbituril derivative of Formula 1 with the organic compound of Formula 2 in the reaction solution to obtain a polymer capsule; and
removing an unreacted residual compound by dialysis.

The present invention also provides a method of preparing a polymer capsule encapsulating a pharmacologically active substance, the method including:
dissolving a cucurbituril derivative of Formula 1, an organic compound of Formula 2, and a pharmacologically active substance in an organic solvent to obtain a reaction solution;
performing copolymerization of the cucurbituril derivative of Formula 1 with the organic compound of Formula 2 in the reaction solution to obtain a pharmacologically active substance-encapsulating polymer capsule; and
removing an unreacted residual compound by dialysis.

In order to prepare a polymer capsule surface-modified with a targeting compound, the targeting compound or a solution containing the targeting compound can be added to the above-described pharmacologically active substance-free or -containing polymer capsule obtained by copolymerization of the cucurbituril derivative of Formula 1 with the organic compound of Formula 2. In detail, a method of preparing a polymer capsule surface-modified with a targeting compound includes:
dissolving a cucurbituril derivative of Formula 1 and an organic compound of Formula 2 in an organic solvent to obtain a reaction solution;
performing copolymerization of the cucurbituril derivative of Formula 1 with the organic compound of Formula 2 in the reaction solution to obtain a solution containing a polymer capsule;
adding a targeting compound or a targeting compound-containing solution to the polymer capsule-containing solution so that the targeting compound is included in an intramolecular cavity of a cucurbituril derivative part constituting the polymer capsule; and
removing an unreacted residual compound by dialysis.

Furthermore, a method of preparing a pharmacologically active substance-encapsulating polymer capsule in which a targeting compound is included in an intramolecular cavity of a cucurbituril derivative includes adding the targeting compound or a solution containing the targeting compound to a previously prepared pharmacologically active substance-encapsulating polymer capsule. In detail, a method of preparing a pharmacologically active substance-encapsulating polymer capsule which is surface-modified with a targeting compound includes:
dissolving a cucurbituril derivative of Formula 1, an organic compound of Formula 2, and a pharmacologically active substance in an organic solvent to obtain a reaction solution;
performing copolymerization of the cucurbituril derivative of Formula 1 with the organic compound of Formula 2 in the reaction solution to obtain a solution containing a pharmacologically active substance-encapsulating polymer capsule;
adding a targeting compound or a targeting compound-containing solution to the pharmacologically active substance-encapsulating polymer capsule-containing solution so that the targeting compound is included in an intramolecular cavity of a cucurbituril derivative part constituting the polymer capsule; and
removing an unreacted residual compound by dialysis.

In the preparation methods of the polymer capsules, there is no limitation to the addition sequence of the cucurbituril derivative of Formula 1, the organic compound of Formula 2, and the pharmacologically active substance to the organic solvent. The cucurbituril derivative of Formula 1, the organic compound of Formula 2, and the pharmacologically active substance can be dissolved in the organic solvent in a random sequence.

In the preparation methods of the polymer capsules, the organic solvent may be a solvent capable of solubilizing the cucurbituril derivative of Formula 1 and the organic compound of Formula 2. The organic solvent may be selected from the group consisting of chloroform, methyl alcohol, ethyl alcohol, dimethylsulfoxide, dichloromethane, dimethylformamide, tetrahydrofuran, and a combination thereof, but the present invention is not limited thereto. The organic solvent may be used in an amount sufficient to completely dissolve the cucurbituril derivative of Formula 1 and the organic compound of Formula 2. When using the pharmacologically active substance, the organic solvent may be used in an amount sufficient to completely dissolve the cucurbituril derivative of Formula 1, the organic compound of Formula 2, and the pharmacologically active substance.

In the preparation methods of the polymer capsules, the copolymerization of the cucurbituril derivative of Formula 1 with the organic compound of Formula 2 may be performed using a copolymerization method known in the art. For example, the copolymerization of the cucurbituril derivative of Formula 1 with the organic compound of Formula 2 may be performed by UV irradiation. The copolymerization is almost completed by UV irradiation for about 6 hours, but UV irradiation for more than 6 hours is also possible. The UV irradiation may be performed using UV light with a wavelength of 256 nm or 300 nm. At this time, a reaction temperature may be maintained at room temperature.

In the copolymerization of the cucurbituril derivative of Formula 1 with the organic compound of Formula 2, a radical initiator may be added to the reaction solution before the UV irradiation. The copolymerization of the cucurbituril derivative of Formula 1 with the compound of Formula 2 can be further promoted in the presence of the radical initiator. The radical initiator may be selected from the group consisting of AIBN, K₂S₂O₈, (NH₄)₂S₂O₈, benzoyl peroxide, and a combination thereof, but the present invention is not limited thereto. Any radical initiator known in the art may also be used.

In the preparation of the pharmacologically active substance-free or -containing polymer capsule which is surface-modified with the targeting compound by including the targeting compound in the cavity of the cucurbituril derivative part constituting the polymer capsule, a targeting compound-containing solution can be added to a polymer capsule-containing dispersion. Alternatively, a targeting compound per se, instead of a targeting compound-containing solution, can also be added to a polymer capsule-containing dispersion.

Polymer capsules prepared by copolymerization of a cucurbituril derivative with an organic compound according to the above-described preparation methods can be identified using a Scanning Electron Microscope (SEM) after dripping a droplet of a product solution on a plate and drying the droplet of the product solution. The diameters of the polymer capsules can be measured using a Dynamic Light Scattering Spectrophotometer (DLSS).

### ADVANTAGEOUS EFFECTS

As described above, the present invention provides a polymer capsule prepared by copolymerization of a cucurbituril derivative with an organic compound, a polymer capsule surface-modified with a targeting compound, a drug-encapsulating polymer capsule, and a drug-encapsulating polymer capsule that is surface-modified with a targeting compound. The present invention also provides methods of preparing the polymer capsules.

### BEST MODE

Hereinafter, the present invention will be described more specifically with reference to the following working examples. The following working examples are for illustrative purposes and are not intended to limit the scope of the invention.

### <Examples>

### Example 1

### Preparation of polymer capsules (1)

1.0 mg of allyloxycucurbit[12]uril was completely dissolved in about 10 mL of methyl alcohol, and 40 mg of 1,3-dioxa-2,8-octanedithiol was added thereto. The reaction mixture was exposed to 256 nm UV light and 300 nm UV light for about 6 hours, and then dialyzed to remove unreacted residual allyloxycucurbit[12]uril and 1,3-dioxa-2,8-octanedithiol.

A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.).

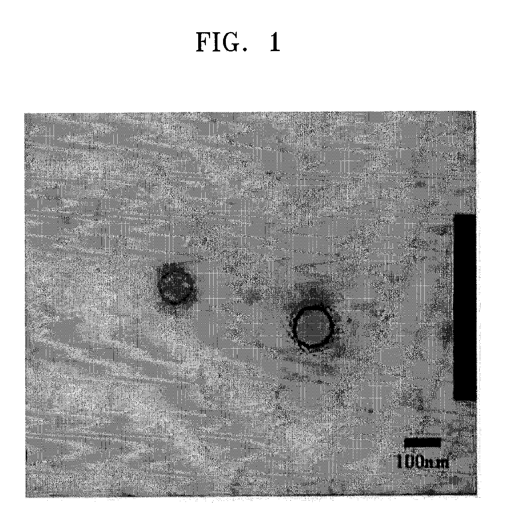

The SEM image of the polymer capsules is shown in FIG. 1. The SEM image of FIG. 1 identified the presence of the polymer capsules. An average diameter of the polymer capsules measured by the DLSS was 100 nm.

### Example 2

### Preparation of polymer capsules (2)

1.0 mg of allyloxycucurbit[12]uril was completely dissolved in about 10 mL of methyl alcohol, and 40 mg of 2,8-octanedithiol was added thereto. The reaction mixture was exposed to 256 nm UV light and 300 nm UV light for about 6 hours and then dialyzed to remove unreacted residual allyloxycucurbit[12]uril and 1,3-dioxa-2,8-octanedithiol.

A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.). The SEM and DLSS analyses revealed the presence of polymer capsules having an average diameter of 120 nm.

### Example 3

### Preparation of albumin-encapsulating polymer capsules

1.0 mg of allyloxycucurbit[12]uril was completely dissolved in about 10 mL of methyl alcohol, and 40 mg of 1,3-dioxa-2,8-octanedithiol and 1 mg of albumin were added thereto. The reaction mixture was exposed to 256 nm UV light and 300 nm UV light for about 6 hours and then dialyzed to remove uncopolymerized residual allyloxycucurbit[12]uril and 1,3-dioxa-2,8-octanedithiol, and unencapsulated albumin.

A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.). The SEM and DLSS analyses revealed the presence of polymer capsules having an average diameter of 120 nm.

### Example 4

### Preparation of hydrocortisone-encapsulating polymer capsules

1.0 mg of allyloxycucurbit[12]uril was completely dissolved in about 10 mL of methyl alcohol, and 40 mg of 1,3-dioxa-2,8-octanedithiol and 1 mg of hydrocortisone were added thereto. The reaction mixture was exposed to 256 nm UV light and 300 nm UV light for about 6 hours and then dialyzed to remove uncopolymerized residual allyloxycucurbit[12]uril and 1,3-dioxa-2,8-octanedithiol, and unencapsulated hydrocortisone.

A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.). The SEM and DLSS analyses revealed the presence of polymer capsules having an average diameter of 110 nm.

### Example 5

### Preparation of albumin-encapsulating polymer capsules which are surface-modified with mannose

1.0 mg of allyloxycucurbit[12]uril was completely dissolved in about 10 mL of methyl alcohol, and 40 mg of 1,3-dioxa-2,8-octanedithiol and 1 mg of albumin were added thereto. The reaction mixture was exposed to 256 nm UV light and 300 nm UV light for about 6 hours, and 0.5 mg of mannose-spermidine wherein spermidine was incorporated into the C1 position of mannose was then added thereto. The reaction solution was incubated, for one day and then dialyzed to remove uncopolymerized residual allyloxycucurbit[12]uril and 1,3-dioxa-2,8-octanedithiol, unencapsulated albumin, and unincluded mannose-spermidine.

A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.). The SEM and DLSS analyses revealed the presence of polymer capsules having an average diameter of 200 nm.

### Example 6

### Preparation of albumin-encapsulating polymer capsules which are surface-modified with galactose

1.0 mg of allyloxycucurbit[12]uril was completely dissolved in about 10 mL of methyl alcohol, and 40 mg of 1,3-dioxa-2,8-octanedithiol and 1 mg of albumin were added thereto. The reaction mixture was exposed to 256 nm UV light and 300 nm UV light for about 6 hours, and 0.5 mg of galactose-spermidine wherein spermidine was incorporated into the C1 position of galactose was then added thereto. The reaction solution was incubated for one day and then dialyzed to remove uncopolymerized residual allyloxycucurbit[12]uril and 1,3-dioxa-2,8-octanedithiol, unencapsulated albumin, and unincluded galactose-spermidine. A droplet of the resultant solution was dripped onto a plate and dried to identify polymer capsules using a SEM (XL 30S, Philips). The diameters of the polymer capsules were measured using a DLSS (ELS-8000, O, Ostuka Electronics Co., Ltd.). The SEM and DLSS analyses revealed the presence of polymer capsules having an average diameter of 200 nm.

## Claims

1. A polymer capsule having a diameter of 10 to 1,000 nm which is prepared by copolymerization of a cucurbituril derivative represented by Formula 1 below with an organic compound represented by Formula 2 below: 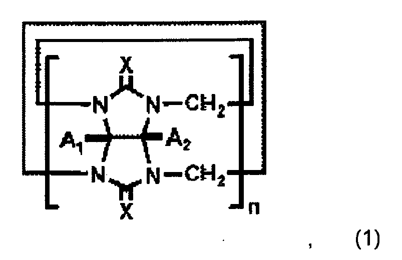 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂SCH₂COOH, -OCH₂CH₂CH₂SCH₂CH₂NH₂, and -OC(=O)CH₂CH₂CH₂CH₂ CH₂CH₂CH₂CH₂CH₂CH₂CH₃, or is -O-A-CH=CH₂ where A is C₁-C₂₀ alkylene in which oxygen, sulfur, or nitrogen may be inserted into a carbon-carbon bond of the alkylene;
X is O, S, or NH; and
n is an integer of 4 to 20, and
(Hs)ⱼ-Z-(SH)ₖ, (2)
wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂ (OH)CH₂(OH)CH₂SH, CH₃CH₂C(CH₂OOCCH₂CH₂SH)₃, and C(CH₂OOCCH₂CH₂SH)₄, and in which oxygen, sulfur, or nitrogen may be inserted into a carbon-carbon bond of the alkylene; and
j and k are each independently an integer of 1 to 3.

2. The polymer capsule of claim 1, wherein the cucurbituril derivative of Formula 1 is a compound having 6-12 allyl groups.

3. The polymer capsule of claim 1, wherein the organic compound of Formula 2 is selected from the group consisting of 1,8-octanedithiol, 3,6-dioxa-1,8-octanedithiol, pentaerythritol tetrakis(3-mercaptopropionate), trimethylolpropane tri(3-mercaptopropionate), and a combination thereof.

4. The polymer capsule of claim 1, wherein a targeting compound is included in an intramolecular cavity of a cucurbituril derivative part constituting the polymer capsule so that a targeting moiety of the targeting compound is exposed outside the polymer capsule.

5. The polymer capsule of claim 4, wherein the targeting compound is a compound represented by Formula 3 below:
A-B-T, (3)
wherein,
A is 1,3-diaminopropyl, 1,4-diaminobutyl, 1,5-diaminopentyl, 1,6-diaminohexyl, sperminyl, spermidinyl, propylamino, butylamino, pentylamino, hexylamino, biologenyl, pyridinyl, ferrocenyl, or an amino acid;
B is hydrogen, C₁-C₃₀ alkyl, C₁-C₃₀ alkenyl, C₁-C₃₀ alkynyl, C₂-C₃₀ carbonylalkyl, C₁-C₃₀ thioalkyl, C₁-C₃₀ alkylsulfanyl, C₁-C₃₀ alkyloxy, C₁-C₃₀ hydroxyalkyl, C₁-C₃₀ alkylsilyl, C₁-C₃₀ aminoalkyl, C₁-C₃₀ aminoalkylthioalkyl, C₅-C₃₀ cycloalkyl, C₂-C₃₀ heterocycloalkyl, C₆-C₃₀ aryl, C₆-C₂₀ arylalkyl, C₄-C₃₀ heteroaryl, or C₄-C₂₀ heteroarylalkyl; and
T is a targeting moiety selected from the group consisting of sugar, polypeptide, protein, and gene.

6. The polymer capsule of claim 5, wherein the sugar is glucose, mannose, or galactose.

7. The polymer capsule of claim 5, wherein the protein is lectin, selectin, or transferrin.

8. The polymer capsule of claim 1, wherein a pharmacologically active substance is encapsulated as a guest molecule in the polymer capsule.

9. The polymer capsule of claim 4, wherein a pharmacologically active substance is encapsulated as a guest molecule in the polymer capsule.

10. The polymer capsule of claim 8 or 9, wherein the pharmacologically active substance is an organic compound selected from the group consisting of hydrocortisone, prednisolone, spironolactone, testosterone, megesterol acetate, danasole, progesterone, indomethacine, amphotericin B, and a combination thereof.

11. The polymer capsule of claim 8 or 9, wherein the pharmacologically active substance is a protein selected from the group consisting of human growth hormone, G-CSF (granulocyte colony-stimulating factor), GM-CSF (granulocyte-macrophage colony-stimulating factor), erythropoietin, vaccine, antibody, insulin, glucagon, calcitonin, ACTH (adrenocorticotropic hormone), somatostatin, somatotropin, somatomedin, parathormone, thyroid hormone, hypothalamus secretion, prolactin, endorphin, VEGF (vascular endothelial growth factor), enkephalin, vasopressin, nerve growth factor, non-naturally occurring opioid, interferon, asparaginase, alginase, superoxide dismutase, trypsin, chymotrypsin, pepsin, and a combination thereof.

12. A method of preparing the polymer capsule of claim 1, the method comprising:
dissolving a cucurbituril derivative represented by Formula 1 below and an organic compound represented by Formula 2 below in an organic solvent to obtain a reaction solution;
performing copolymerization of the cucurbituril derivative of Formula 1 with the organic compound of Formula 2 in the reaction solution to obtain a polymer capsule; and
removing an unreacted residual compound by dialysis: 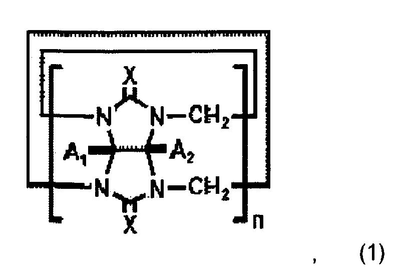 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂SCH₂COOH, -OCH₂CH₂CH₂SCH₂CH₂NH₂, and -OC(=O)CH₂CH₂CH₂CH₂ CH₂CH₂CH₂CH₂CH₂CH₂CH₃, or is -O-A-CH=CH₂ where A is C₁-C₂₀ alkylene in which oxygen, sulfur, or nitrogen may be inserted into a carbon-carbon bond of the alkylene;
X is O, S, or NH; and
n is an integer of 4 to 20, and
(Hs)ⱼ-Z-(SH)ₖ, (2)
wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃, and C(CH₂OOCCH₂ CH₂SH)₄, and in which oxygen, sulfur, or nitrogen may be inserted into a carbon-carbon bond of the alkylene; and
j and k are each independently an integer of 1 to 3.

13. A method of preparing the polymer capsule of claim 4, the method comprising:
dissolving a cucurbituril derivative represented by Formula 1 below and an organic compound represented by Formula 2 below in an organic solvent to obtain a reaction solution;
performing copolymerization of the cucurbituril derivative of Formula 1 with the organic compound of Formula 2 in the reaction solution to obtain a solution containing a polymer capsule;
adding a targeting compound or a targeting compound-containing solution to the polymer capsule-containing solution so that the targeting compound is included in an intramolecular cavity of a cucurbituril derivative part constituting the polymer capsule; and
removing an unreacted residual compound by dialysis: 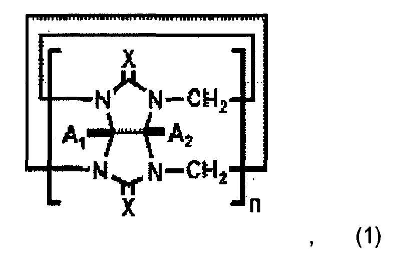 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂SCH₂COOH, -OCH₂CH₂CH₂SCH₂CH₂NH₂, and -OC(=O)CH₂CH₂CH₂CH₂ CH₂CH₂CH₂CH₂CH₂CH₂CH₃, or is -O-A-CH=CH₂ where A is C₁₋C₂₀ alkylene in which oxygen, sulfur, or nitrogen may be inserted into a carbon-carbon bond of the alkylene;
X is O, S, or NH; and
n is an integer of 4 to 20, and
(HS)ⱼ-Z-(SH)ₖ, (2)
wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂ (OH)CH₂(OH)CH₂SH, CH₃CH₂C(CH₂OOCCH₂CH₂SH)₃, and C(CH₂OOCCH₂CH₂SH)₄, and in which oxygen, sulfur, or nitrogen may be inserted into a carbon-carbon bond of the alkylene; and
j and k are each independently an integer of 1 to 3.

14. A method of preparing the polymer capsule of claim 8, the method comprising:
dissolving a cucurbituril derivative represented by Formula 1 below, an organic compound represented by Formula 2 below, and a pharmacologically active substance in an organic solvent to obtain a reaction solution;
performing copolymerization of the cucurbituril derivative of Formula 1 with the organic compound of Formula 2 in the reaction solution to obtain a pharmacologically active substance-encapsulating polymer capsule; and
removing an unreacted residual compound by dialysis: 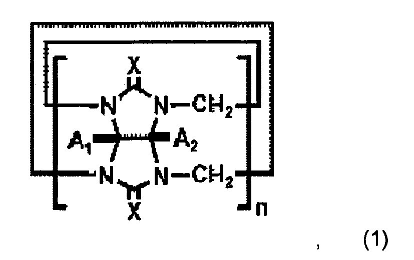 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂SCH₂COOH, -OCH₂CH₂CH₂SCH₂CH₂NH₂, and -OC(=O)CH₂CH₂CH₂CH₂ CH₂CH₂CH₂CH₂CH₂CH₂CH₃, or is -O-A-CH=CH₂ where A is C₁₋C₂₀ alkylene in which oxygen, sulfur, or nitrogen may be inserted into a carbon-carbon bond of the alkylene;
X is O, S, or NH; and
n is an integer of 4 to 20, and
(HS)ⱼ-Z-(SH)ₖ, (2)
wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂ (OH)CH₂(OH)CH₂SH, CH₃CH₂C(CH₂OOCCH₂CH₂SH)₃, and C(CH₂OOCCH₂CH₂SH)₄, and in which oxygen, sulfur, or nitrogen may be inserted into a carbon-carbon bond of the alkylene; and
j and k are each independently an integer of 1 to 3.

15. A method of preparing the polymer capsule of claim 9, the method comprising:
dissolving a cucurbituril derivative represented by Formula 1 below, an organic compound represented by Formula 2 below, and a pharmacologically active substance in an organic solvent to obtain a reaction solution;
performing copolymerization of the cucurbituril derivative of Formula 1 with the organic compound of Formula 2 in the reaction solution to obtain a solution containing a pharmacologically active substance-encapsulating polymer capsule;
adding a targeting compound or a targeting compound-containing solution to the pharmacologically active substance-encapsulating polymer capsule-containing solution so that the targeting compound is included in an intramolecular cavity of a cucurbituril derivative part constituting the polymer capsule; and
removing an unreacted residual compound by dialysis: 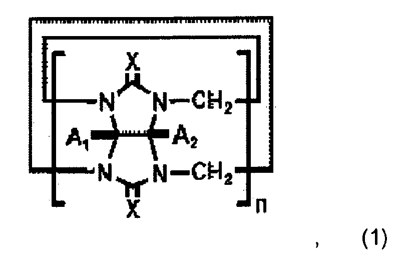 wherein,
at least one or all of n A₁'s and n A₂'s is selected from the group consisting of a hydroxy group, a methyloxy group, a butyloxy group, a dodecabutyloxy group, a propynyloxy group, a hydroxyethyloxy group, a C₁-C₃₀ alkyloxycarbonyloxy group, a C₁-C₃₀ alkylcarbonyloxy group, a C₁-C₃₀ aminoalkyloxy group, -OC(=O)CH₃, -OCH₂CH₂CH₂ SCH₂COOH, -OCH₂CH₂CH₂SCH₂CH₂NH₂, and -OC(=O)CH₂CH₂CH₂CH₂CH₂CH₂CH₂ CH₂CH₂CH₂CH₃, or is -O-A-CH=CH₂ where A is C₁-C₂₀ alkylene in which oxygen, sulfur, or nitrogen may be inserted into a carbon-carbon bond of the alkylene;
X is O, S, or NH; and
n is an integer of 4 to 20, and
(HS)ⱼ-Z-(SH)ₖ, (2)
wherein,
Z is C₁-C₂₀ alkylene which may be substituted by one selected from the group consisting of HSCH₂CH₂CH₂CH₂CH₂CH₂SH, HSCH₂CH₂OCH₂CH₂OCH₂CH₂SH, HSCH₂CH₂ (OH)CH₂(OH)CH₂SH, CH₃CH₂C(CH₂OOCCH₂CH₂SH)₃, and C(CH₂OO-CCH₂CH₂SH)₄, and in which oxygen, sulfur, or nitrogen may be inserted into a carbon-carbon bond of the alkylene; and
j and k are each independently an integer of 1 to 3.

16. The method of any one of claims 12 through 15, wherein the organic solvent is selected from the group consisting of water, chloroform, methyl alcohol, ethyl alcohol, dimethylsulfoxide, dichloromethane, dimethylformamide, tetrahydrofuran, and a combination thereof.

17. The method of any one of claims 12 through 15, wherein the copolymerization of the cucurbituril derivative of Formula 1 with the organic compound of Formula 2 is performed by UV irradiation.

18. The method of claim 17, wherein in the copolymerization of the cucurbituril derivative of Formula 1 with the organic compound of Formula 2, a radical initiator is added to the reaction solution before the UV irradiation.

19. The method of claim 18, wherein the radical initiator is selected from the group consisting of AlBN, K₂S₂O₈, (NH₄)₂S₂O₈, benzoyl peroxide, and a combination thereof.

## Patentansprüche

1. Polymerkapsel mit einem Durchmesser von 10 bis 1.000 nm, die durch Copolymerisation eines Cucurbiturilderivates, dargestellt durch die Formel 1 unten, mit einer organischen Verbindung, dargestellt durch die Formel 2 unten, hergestellt list. 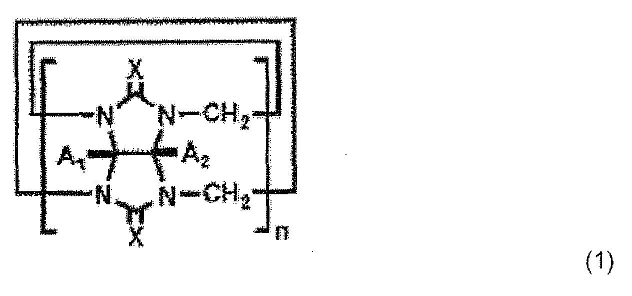 wobei,
wenigstens eines oder alle der n A₁ und der n A₂ ausgewählt sind aus der Gruppe bestehend aus einer Hydroxygruppe, einer Methyloxygruppe, einer Butyloxygruppe, einer Dodecabutyloxygruppe, einer Propynyloxygruppe, einer Hydroxyethyloxygruppe, einer C₁-C₃₀-Alkyloxycarbonyloxygruppe, einer C₁-C₃₀-Alkylcarbonyloxygruppe, einer C₁-C₃₀-Aminoalkyloxygruppe, -OC(=O)CH₃, - OCH₂CH₂CH₂SCH₂COOH, -OCH₂CH₂CH₂SCH₂CH₂NH₂ und - OC(=O)CH₂CH₂CH₂CH₂CH₂CH₂CH₂CH₂CH₂CH₂CH₃, oder -O-A-CH=CH₂ sind, wobei A ein C₁-C₂₀-Alkylen ist, bei dem Sauerstoff, Schwefel oder Stickstoff in eine Kohlenstoff-Kohlenstoff-Bindung des Alkylens eingebaut sein können;
X O, S oder NH ist; und
n eine ganze Zahl von 4 bis 20 ist; und
(HS)ⱼ-Z-(SH)ₖ (2)
wobei,
Z ein C₁-C₂₀-Alkylen ist, das substituiert sein kann durch ein Mitglied, ausgewählt aus der Gruppe bestehend aus HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃ und C(CH₂OOCCH₂CH₂SH)₄, und bei dem Sauerstoff, Schwefel oder Stickstoff in eine Kohlenstoff-Kohlenstoff-Bindung des Alkylens eingebaut sein können; und
j und k jeweils unabhängig voneinander eine ganze Zahl von 1 bis 3 sind.

2. Polymerkapsel nach Anspruch 1, wobei das Cucurbiturilderivat der Formel 1 eine Verbindung mit 6-12 Allylgruppen ist.

3. Polymerkapsel nach Anspruch 1, wobei die organische Verbindung der Formel 2 ausgewählt ist aus der Gruppe bestehend aus 1,8-Octandithiol, 3,6-Dioxa-1,8-octandithiol, Pentaerythritoitetrakis(3-mercaptopropionat), Trimethylolpropan-tri(3-mercaptopropionat) und einer Kombination davon.

4. Polymerkapsel nach Anspruch 1, wobei eine Targetverbindung in einer intramolekularen Kavität eines Cucurbiturilderivatanteils, der die Polymerkapsel bildet, enthalten ist, so dass sich der Targetteil der Targetverbindung außerhalb der Polymerkapsel befindet.

5. Polymerkapsel nach Anspruch 4, wobei die Targetverbindung eine Verbindung, dargestellt durch die Formel 3 unten, ist:
A-B-T (3)
wobei,
A 1,3-Diaminopropyl, 1,4-Diaminobutyl, 1,5-Diaminopentyl, 1,6-Diaminohexyl, Sperminyl, Spermidinyl, Propylamino, Butylamino, Pentylamino, Hexylamino, Biologenyl, Pyridinyl, Ferrocenyl oder eine Aminosäure ist;
B Wasserstoff, C₁-C₃₀-Alkyl, C₁-C₃₀-Alkenyl, C₁-C₃₀-Alkinyl, C₂-C₃₀-Carbonylalkyl, C₁-C₃₀-Thioalkyl, C₁-C₃₀-Alkylsulfanyl, C₁-C₃₀-Alkyloxy, C₁-C₃₀-Hydroxyalkyl, C₁-C₃₀-Alkylsilyl, C₁-C₃₀-Aminoalkyl, C₁-C₃₀-Aminoalkylthioalkyl, C₅-C₃₀-Cycloalkyl, C₂-C₃₀-Heterocycloalkyl, C₆-C₃₀-Aryl, C₆-C₂₀-Arylalkyl, C₄-C₃₀-Heteroaryl oder C₄-C₂₀-Heteroarylalkyl ist; und
T ein Targetteil, ausgewählt aus der Gruppe bestehend aus einem Zucker, einem Polypeptid, einem Protein oder einem Gen, ist.

6. Polymerkapsel nach Anspruch 5, wobei der Zucker Glucose, Mannose oder Galactose ist.

7. Polymerkapsel nach Anspruch 5, wobei das Protein Lectin, Selectin oder Transferrin ist.

8. Polymerkapsel nach Anspruch 1, wobei eine pharmakologisch wirksame Substanz als Gastmolekül in der Polymerkapsel verkapselt ist.

9. Polymerkapsel nach Anspruch 4, wobei eine pharmakologisch wirksame Substanz als Gastmolekül in der Polymerkapsel verkapselt ist.

10. Polymerkapsel nach Anspruch 8 oder 9, wobei die pharmakologisch wirksame Substanz eine organische Verbindung, ausgewählt aus der Gruppe bestehend aus Hydrocortison, Prednisolon, Spironolacton, Testosteron, Megesterolacetat, Danasol, Progesteron, Indomethacin, Amphotericin B und einer Kombination davon, ist.

11. Polymerkapsel nach Anspruch 8 oder 9, wobei die pharmakologisch wirksame Substanz ein Protein, ausgewählt aus der Gruppe bestehend aus humanem Wachstumshormon, G-CSF (Granulozyten-Kolonie stimulierender Faktor), GM-CSF (Granulozyten-Macrophagen-Kolonie stimulierender Faktor), Erythropoetin, einem Vakzin, einem Antikörper, Insulin, Glucagon, Calcitonin, ACTH (Adrenocorticotropes Hormon), Somatostatin, Somatotropin, Somatomedin, Parathormon, Thyroidhormon, Hypothalamussekret, Prolaktin, Endorphin, VEGF (vaskulärer endothelialer Wachstumsfaktor), Enkephalin, Vasopressin, Nervenwachstumsfaktor, einem nicht natürlich vorkommendem Opioid, Interferon, Asparaginase, Alginase, Superoxiddismutase, Trypsin, Chymotrypsin, Pepsin und eine Kombination davon, ist.

12. Verfahren zur Herstellung der Polymerkapsel nach Anspruch 1, wobei das Verfahren umfasst:
Auflösen eines Cucurbiturilderivates, dargestellt durch Formel 1 unten, und einer organischen Verbindung, dargestellt durch Formel 2 unten, in einem organischen Lösungsmittel, um eine Reaktionslösung zu erhalten;
Durchführen einer Copolymerisation des Cucurbiturilderivates der Formel 1 mit der organischen Verbindung der Formel 2 in der Reaktionslösung, um eine Polymerkapsel zu erhalten; und
Entfernen einer nicht umgesetzten Restverbindung durch Dialyse: 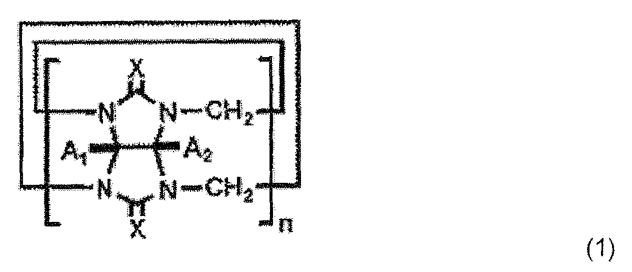 wobei,
wenigstens eines oder alle der n A₁ und der n A₂ ausgewählt sind aus der Gruppe bestehend aus einer Hydroxygruppe, einer Methyloxygruppe, einer Butyloxygruppe, einer Dodecabutyloxygruppe, einer Propynyloxygruppe, einer Hydroxyethyloxygruppe, einer C₁-C₃₀-Alkyloxycarbonyloxygruppe, einer C₁-C₃₀-Alkylcarbonyloxygruppe, einer C₁-C₃₀-Aminoalkyloxygruppe, -OC(=O)CH₃, - OCH₂CH₂CH₂SCH₂COOH, -OCH₂CH₂CH₂SCH₂CH₂NH₂ und - OC(=O)CH₂CH₂CH₂CH₂CH₂CH₂CH₂CH₂CH₂CH₂CH₃, oder -O-A-CH=CH₂ sind, wobei A ein C₁-C₂₀-Alkylen ist, bei dem Sauerstoff, Schwefel oder Stickstoff in eine Kohlenstoff-Kohlenstoff-Bindung des Alkylens eingebaut sein können;
X O, S oder N H ist; und
n eine ganze Zahl von 4 bis 20 ist; und
(HS)ⱼ-Z-(SH)ₖ (2)
wobei,
Z ein C₁-C₂₀-Alkylen ist, das substituiert sein kann durch ein Mitglied, ausgewählt aus der Gruppe bestehend aus HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃ und C(CH₂OOCCH₂CH₂SH)₄, und bei dem Sauerstoff, Schwefel oder Stickstoff in eine Kohlenstoff-Kohlenstoff-Bindung des Alkylens eingebaut sein können; und
j und k jeweils unabhängig voneinander eine ganze Zahl von 1 bis 3 sind.

13. Verfahren zur Herstellung der Polymerkapsel nach Anspruch 4, wobei das Verfahren umfasst:
Auflösen eines Cucurbiturilderivates, dargestellt durch Formel 1 unten, und einer organischen Verbindung, dargestellt durch Formel 2 unten, in einem organischen Lösungsmittel, um eine Reaktionslösung zu erhalten; Durchführen einer Copolymerisation des Cucurbiturilderivates der Formel 1 mit der organischen Verbindung der Formel 2 in der Reaktionslösung, um eine Lösung, enthaltend eine Polymerkapsel, zu erhalten;
Zugeben einer Targetverbindung oder einer Targetverbindung enthaltenden Lösung zu der Polymerkapsel enthaltenden Lösung, so dass die Targetverbindung in eine intramolekulare Kavität eines Cucurbiturilderivatanteils, der die Polymerkapsel bildet, eingeschlossen wird; und
Entfernen einer nicht umgesetzten Restverbindung durch Dialyse: 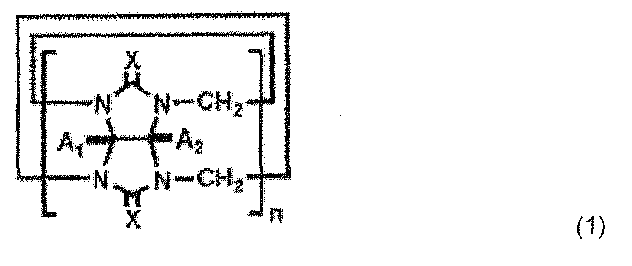 wobei,
wenigstens eines oder alle der n A₁ und der n A₂ ausgewählt sind aus der Gruppe bestehend aus einer Hydroxygruppe, einer Methyloxygruppe, einer Butyloxygruppe, einer Dodecabutyloxygruppe, einer Propynyloxygruppe, einer Hydroxyethyloxygruppe, einer C₁-C₃₀-Alkyloxycarbonyloxygruppe, einer C₁-C₃₀-Alkylcarbonyloxygruppe, einer C₁-C₃₀-Aminoalkyloxygruppe, -OC(=O)CH₃, - OCH₂CH₂CH₂SCH₂COOH, -OCH₂CH₂CH₂SCH₂CH₂NH₂ und - OC(=O)CH₂CH₂CH₂CH₂CH₂CH₂CH₂CH₂CH₂CH₂CH₃, oder -O-A-CH=CH₂ sind, wobei A ein C₁-C₂₀-Alkylen ist, bei dem Sauerstoff, Schwefel oder Stickstoff in eine Kohlenstoff-Kohlensfioff-Bindung des Alkylens eingebaut sein können;
X O, S oder NH ist; und
n eine ganze Zahl von 4 bis 20 ist; und
(HS)ⱼ-Z-(SH)ₖ (2)
wobei,
Z ein C₁-C₂₀-Alkylen ist, das substituiert sein kann durch ein Mitglied, ausgewählt aus der Gruppe bestehend aus HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃ und C(CH₂OOCCH₂CH₂SH)₄, und bei dem Sauerstoff, Schwefel oder Stickstoff in eine Kohlenstoff-Kohlenstoff-Bindung des Alkylens eingebaut sein können; und
j und k jeweils unabhängig voneinander eine ganze Zahl von 1 bis 3 sind.

14. Verfahren zur Herstellung der Polymerkapsel nach Anspruch 8, wobei das Verfahren umfasst:
Auflösen eines Cucurbiturilderivates, dargestellt durch Formel 1 unten, einer organischen Verbindung, dargestellt durch Formel 2 unten, und einer pharmakologisch wirksamen Substanz in einem organischen Lösungsmittel, um eine Reaktionslösung zu erhalten;
Durchführen einer Copolymerisation des Cucurbiturilderivates der Formel 1 mit der organischen Verbindung der Formel 2 in der Reaktionslösung, um eine die pharmakologisch wirksame Substanz verkapselnde Polymerkapsel zu erhalten; und
Entfernen einer nicht umgesetzten Restverbindung durch Dialyse: 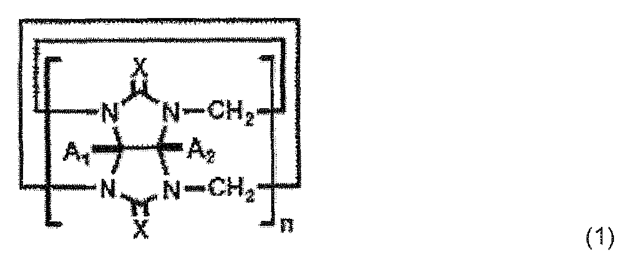 wobei,
wenigstens eines oder alle der n A₁ und der n A₂ ausgewählt sind aus der Gruppe bestehend aus einer Hydroxygruppe, einer Methyloxygruppe, einer Butyloxygruppe, einer Dodecabutyloxygruppe, einer Propynyloxygruppe, einer Hydroxyethyloxygruppe, einer C₁-C₃₀-Alkyloxycarbonyloxygruppe, einer C₁-C₃₀-Alkylcarbonyloxygruppe, einer C₁-C₃₀-Aminoalkyloxygruppe, -OC(=O)CH₃, - OCH₂CH₂CH₂SCH₂COOH , -OCH₂CH₂CH₂SCH₂CH₂NH₂ und - OC(=O)CH₂CH₂CH₂CH₂CH₂CH₂CH₂CH₂CH₂CH₂CH₃, oder -O-A-CH=CH₂ sind, wobei A ein C₁-C₂₀-Alkylen ist, bei dem Sauerstoff, Schwefel oder Stickstoff in eine Kohlenstoff-Kohlenstoff-Bindung des Alkylens eingebaut sein können;
X O, S oder NH ist; und
n eine ganze Zahl von 4 bis 20 ist; und
(HS)ⱼ-Z-(SH)ₖ (2)
wobei,
Z ein C₁-C₂₀-Alkylen ist, das substituiert sein kann durch ein Mitglied, ausgewählt aus der Gruppe bestehend aus HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃ und C(CH₂OOCCH₂CH₂SH)₄, und bei dem Sauerstoff, Schwefel oder Stickstoff in eine Kohlenstoff-Kohlenstoff-Bindung des Alkylens eingebaut sein können; und
j und k jeweils unabhängig voneinander eine ganze Zahl von 1 bis 3 sind.

15. Verfahren zur Herstellung der Polymerkapsel nach Anspruch 9, wobei das Verfahren umfasst:
Auflösen eines Cucurbiturilderivates, dargestellt durch Formel 1 unten, einer organischen Verbindung, dargestellt durch Formel 2 unten, und einer pharmakologisch wirksamen Substanz in einem organischen Lösungsmittel, um eine Reaktionslösung zu erhalten;
Durchführen einer Copolymerisation des Cucurbiturilderivates der Formel 1 mit der organischen Verbindung der Formel 2 in der Reaktionslösung, um eine Lösung, enthaltend eine die pharmakologisch wirksame Substanz verkapselnde Polymerkapsel, zu erhalten;
Zugeben einer Targetverbindung oder einer Targetverbindung enthaltenden Lösung zu der die pharmakologisch wirksame Substanz verkapselnde Polymerkapsel enthaltenden Lösung, so dass die Targetverbindung in eine intramolekulare Kavität eines Cucurbiturilderivatanteils, der die Polymerkapsel bildet, eingeschlossen wird; und
Entfernen einer nicht umgesetzten Restverbindung durch Dialyse: 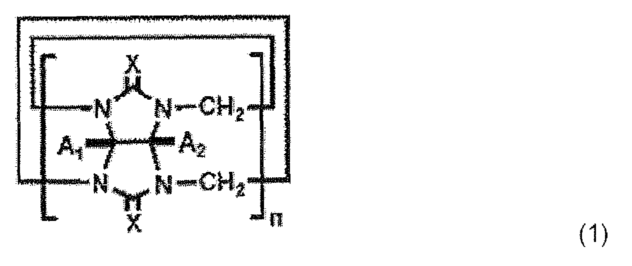 wobei,
wenigstens eines oder alle der n A₁ und der n A₂ ausgewählt sind aus der Gruppe bestehend aus einer Hydroxygruppe, einer Methyloxygruppe, einer Butyloxygruppe, einer Dodecabutyloxygruppe, einer Propynyloxygruppe, einer Hydroxyethyloxygruppe, einer C₁-C₃₀-Alkyloxycarbonyloxygruppe, einer C₁-C₃₀-Alkylcarbonyloxygruppe, einer C₁-C₃₀-Aminoalkyloxygruppe, -OC(=O)CH₃, - OCH₂CH₂CH₂SCH₂COOH, -OCH₂CH₂CH₂SCH₂CH₂NH₂ und - OC(=O)CH₂CH₂CH₂CH₂CH₂CH₂CH₂CH₂CH₂CH₂CH₃, oder -O-A-CH=CH₂ sind, wobei A ein C₁-C₂₀-Alkylen ist, bei dem Sauerstoff, Schwefel oder Stickstoff in eine Kohlenstoff-Kohlenstoff-Bindung des Alkylens eingebaut sein können;
X O, S oder NH ist; und
n eine ganze Zahl von 4 bis 20 ist; und
(HS)ⱼ-Z-(SH)ₖ (2)
wobei,
Z ein C₁-C₂₀-Alkylen ist, das substituiert sein kann durch ein Mitglied, ausgewählt aus der Gruppe bestehend aus HSCH₂CH₂CH₂CH₂CH₂CH₂SH, HSCH₂CH₂OCH₂CH₂OCH₂CH₂SH, HSCH₂CH₂(OH)CH₂(OH)CH₂SH, CH₃CH₂C(CH₂OOCCH₂CH₂SH)₃ und C(CH₂OOCCH₂CH₂SH)₄, und bei dem Sauerstoff, Schwefel oder Stickstoff in eine Kohlenstoff-Kohlenstoff-Bindung des Alkylens eingebaut sein können; und
j und k jeweils unabhängig voneinander eine ganze Zahl von 1 bis 3 sind.

16. Verfahren nach einem der Ansprüche 12 bis 15, wobei das organische Lösungsmittel ausgewählt ist aus der Gruppe bestehend aus Wasser, Chloroform, Methylalkohol, Ethylalkohol, Dimethylsulfoxid, Dichlormethan, Dimethylformamid, Tetrahydrofuran und einer Kombination davon.

17. Verfahren nach einem der Ansprüche 12 bis 15, wobei die Copolymerisation des Cucurbiturilderivates der Formel 1 mit der organischen Verbindung der Formel 2 durch UV-Bestrahlung durchgeführt wird.

18. Verfahren nach Anspruch 17, wobei bei der Copolymerisation des Cucurbiturilderivates der Formel 1 mit der organischen Verbindung der Formel 2 vor der UV-Bestrahlung ein Radikalinitiator zu der Reaktionslösung zugegeben wird.

19. Verfahren nach Anspruch 18, wobei der Radikalinitiator ausgewählt ist aus der Gruppe bestehend aus AIBN, K₂S₂O₈, (NH₄)₂S₂O₈, Benzoylperoxid und einer Kombination davon.

## Revendications

1. Capsule polymère ayant un diamètre de 10 à 1000 nm qui est préparée par copolymérisation d'un dérivé de cucarbituril représenté par la formule 1 ci-dessous avec un composé organique représenté par la formule 2 ci-dessous : 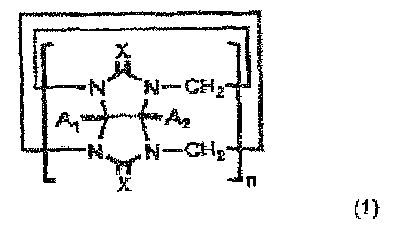 dans laquelle
au moins un ou tous les n A₁ et les n A₂ sont choisis dans le groupe constitué par un groupe hydroxy, un groupe méthyloxy, un groupe butyloxy, un groupe dodécabutyloxy, un groupe propynyloxy, un groupe hydroxyéthyloxy, un groupe alkyloxycarbonyloxy en C₁-C₃₀, un groupe alkylcarbonyloxy en C₁-C₃₀, un groupe aminoalkyloxy en C₁-C₃₀, -OC(=O)CH₃, -OCH₂CH₂CH₂SCH₂COOH, -OCH₂CH₂CH₂SCH₂CH₂NH₂, et -OC (=O)CH₂CH₂CH_{2C}H₂CH₂CH₂CH₂CH₂CH₂CH₂CH₃, ou sont -O-A-CH=CH₂ où A est un groupe alkylène en C₁-C₂₀ dans lequel un atome d'oxygène, de soufre ou d'azote peut être inséré dans une liaison carbone-carbone de l'alkylène ;
X est O, S ou NH ; et
n est un nombre entier de 4 à 20, et
(HS)ⱼ-Z-(SH)ₖ, (2)
dans laquelle
Z est un groupe alkylene en C₁-C₂₀ qui peut être substitué par un élément choisi dans le groupe constitué par HSCH₂CH₂CH₂CH₂CH₂CH₂SH, HSCH₂CH₂OCH₂OCH₂OCH₂CH₂SH, HSCH₂CH₂ (OH) CH₂ (OH) CH₂SH, CH₃CH₂C (CH₂OOCCH₂CH₂SH)₃, et C (CH₂OOCCH₂CH₂SH)₄, et dans lequel un atome d'oxygène, de soufre ou d'azote peut être inséré dans une liaison carbone-carbone de l'alkylène ; et
j et k sont chacun indépendamment un nombre entier de 1 à 3.

2. Capsule polymère selon la revendication 1, dans laquelle le dérivé de cucurbituril de formule 1 est un composé comprenant de 6 à 12 groupes allyle.

3. Capsule polymère selon la revendication 1, dans laquelle le composé organique de formule 2 est choisi dans le groupe constitué par le 1,8-octanedithiol, le 3,6-dioxa-1,8-octanedithiol, le tétrakis(3-mercaptapropianate) de pentaérythritol, le tri(3-mercaptopropionate) de triméthylolpropane et une combinaison de ceux-ci.

4. Capsule polymère selon la revendication 1, dans laquelle un composé de ciblage est inclus dans une cavité intramoléculaire d'une partie du dérivé de cucurbituril constituant la capsule polymère de sorte qu'un fragment de ciblage du composé de ciblage soit exposé à l'extérieur de la capsule polymère.

5. Capsule polymère selon la revendication 4, dans laquelle le composé de ciblage est un composé représenté par la formule 3 ci-dessous :
A-B-T (3)
dans laquelle
A est un groupe 1,3-diaminopropyle, 1,4-diaminobutyle, 1,5-diaminopentyle, 1,6-diaminohexyle, sperminyle, spermidinyle, propylamino, butylamino, pentylamino, hexylamino, biologényle, pyridinyle, ferrocényle ou un acide aminé ;
B est un atome d'hydrogène, un groupe alkyle en C₁-C₃₀, alcényle en C₁-C₃₀, alcynyle en C₁-C₃₀, carbonylalkyl, en C₂-C₃₀, thioalkyl, en C₁-C₃₀, alkylsulfanyle en C₁-C₃₀, alkyloxy en C₁-C₃₀, hydroxyalkyl, en C₁-C₃₀, alkylsilyl, en C₁-C₃₀, aminoalkyl, en C₁-C₃₀, aminoalkylthioalkyle en C₁-C₃₀, cycloalkyle en C₅-C₃₀, hétérocycloalkyle en C₂-C₃₀, aryle en C₆-C₃₀, arylalkyle en C₆-C₂₀, hétéroaryle en C₄-C₃₀, ou hétéroarylalkyle en C₄-C₂₀ ; et
T est un fragment de ciblage choisi dans le groupe constitué par un sucre, un polypeptide, une protéine et un gène.

6. Capsule polymère selon la revendication 5, dans laquelle le sucre est le glucose, le mannose ou le galactose.

7. Capsule polymère selon la revendication 5, dans laquelle la protéine est la lectine, la sélectine ou la transferrine.

8. Capsule polymère selon la revendication 1, dans laquelle une substance pharmacologiquement active est encapsulée sous forme de molécule hôte dans la capsule polymère.

9. Capsule polymère selon la revendication 4, dans laquelle une substance pharmacologiquement active est encapsulée sous forme de molécule hôte dans la capsule polymère.

10. Capsule polymère selon la revendication 8 ou 9, dans laquelle la substance pharmacologiquement active est un composé organique choisi dans le groupe constitué par l'hydrocortisone, la prednisolone, la spironolactone, la testostérone, l'acétate de mégestérol, le danasole, la progestérone, l'indométhacine, l'amphotéricine B et une combinaison de ceux-ci.

11. Capsule polymère selon la revendication 8 ou 9, dans laquelle la substance pharmacologiquement active est une protéine choisie dans le groupe constitué par l'hormone de croissance humaine, G-CSF (facteur de stimulation de colonies de granulocytes), GM-CSF (facteur de stimulation de colonies de macrophages-granulocytes), l'érythropoïétine, un vaccin, un anticorps, l'insuline, le glucagon, la calcitonine, l'ACTH (hormone adrénocorticotropique), la somatostatine, la somatotrophine, la somatomédine, la parathormone, une hormone thyroïdienne, une sécrétion de l'hypothalamus, la prolactine, une endorphine, VEGF (facteur de croissance endothéliale vasculaire), l'encéphaline, la vasopressine, le facteur de croissance nerveuse, un opioïde non naturel, un interféron, l'asparaginase, l'alginase, la superoxyde dismutase, la trypsine, la chymotrypsine, la pepsine et une combinaison de ceux-ci.

12. Procédé de préparation de la capsule polymère selon la revendication 1, le procédé comprenant :
la dissolution d'un dérivé de cucurbituril représenté par la formule 1 ci-dessous et d'un composé organique représenté par la formule 2 ci-dessous dans un solvant organique pour obtenir une solution réactionnelle ;
la copolymérisation du dérivé de cucurbituril de formule 1 avec le composé organique de formule 2 dans la solution réactionnelle pour obtenir une capsule polymère ; et
l'élimination d'un composé résiduel n'ayant pas réagi par dialyse : 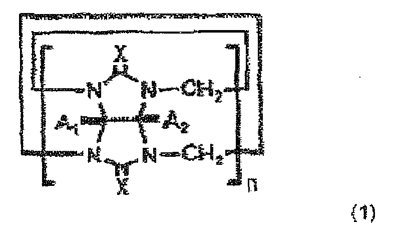 dans laquelle
au moins un ou tous les n A₁ et les n A₂ sont choisis dans le groupe constitué par un groupe hydroxy, un groupe méthyloxy, un groupe butyloxy, un groupe dodécabutyloxy, un groupe propynyloxy, un groupe hydroxyéthyloxy, un groupe alkyloxycarbonyloxy en C₁-C₃₀, un groupe alkyloxycarbonyloxy en C₁-C₃₀, un groupe aminoalkyloxy en C₁-C₃₀, -OC(=O)CH₃, -OCH₂CH₂CH₂SCH₂COOH, -OCH₂CH₂CH₂SCH₂CH₂NH₂, et -OC(=O)CH₂CH₂CH₂CH₂CH₂CH₂CH₂CH₂CH₂CH₂CH₃, ou sont -O-A-CH=CH₂ où A est un groupe alkylene en C₁-C₂₀ dans lequel un atome d'oxygène, de soufre ou d'azote peut être inséré dans une liaison carbone-carbone de l'alkylène ;
X est 0, S ou NH ; et
n est un nombre entier de 4 à 20, et
(HS)ⱼ-Z-(SH)ₖ, (2)
dans laquelle
Z est un groupe alkylène en C₁-C₂₀ qui peut être substitué par un élément choisi dans le groupe constitué par HSCH₂CH₂CH₂CH₂CH₂CH₂SH, HSCH₂CH₂OCH₂CH₂OCH₂CH₂SH, HSCH₂CH₂ (OH) CH₂ (OH) CH₂SH, CH₃CH₂C (CH₂OOCCH₂CH₂SH)₃, et C (CH₂OOCCH₂CH₂SH)₄, et dans lequel un atome d'oxygène, de soufre ou d'azote peut être inséré dans une liaison carbone-carbone de l'alkylène ; et
j et k sont chacun indépendamment un nombre entier de 1 à 3.

13. Procédé de préparation de la capsule polymère selon la revendication 4, le procédé comprenant :
la dissolution d'un dérivé de cucurbituril représenté par la formule 1 ci-dessous et d'un composé organique représenté par la formule 2 ci-dessous dans un solvant organique pour obtenir une solution rédactionnelle ;
la copolymérisation du dérivé de cucurbituril de formule 1 avec le composé organique de formule 2 dans la solution réactionnelle pour obtenir une solution contenant une capsule polymère ;
l'ajout d'un composé de ciblage ou d'une solution contenant un composé de ciblage à la solution contenant la capsule polymère afin que le composé de ciblage soit inclus dans une cavité intramoléculaire d'une partie du dérivé de cucurbituril constituant la capsule polymère ; et
l'élimination d'un composé résiduel n'ayant pas réagi par dialysé : 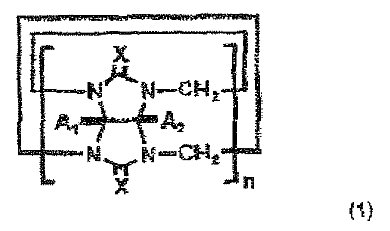 dans laquelle
au moins un ou tous les n A₁ et les n A₂ sont choisis dans le groupe constitué par un groupe hydroxy, un groupe méthyloxy, un groupe butyloxy, un groupe dodécabutyloxy, un groupe propynyloxy, un groupe hydroxyéthyloxy, un groupe alkyloxycarbonyloxy en C₁-C₃₀, un groupe alkylcarbonyloxy en C₁-C₃₀, un groupe aminoalkyloxy en C₁-C₃₀, -OC(=0)CH₃, -OCH₂CH₂CH₂SCH₂COOH, -OCH₂CH₂CH₂SCH₂CH₂NH₂, et -OC(=O)CH₂CH₂CH₂CH₂CH₂CH₂CH₂CH₂CH₂CH₂CH₃, ou sont -O-A-CH=CH₂ où A est un groupe alkylène en C₁-C₂₀ dans lequel un atome d'oxygène, de soufre ou d'azote peut être inséré dans une liaison carbone-carbone de l'alkylène ;
X est O, S ou NH ; et
n est un nombre entier de 4 à 20, et
(HS)ⱼ-Z-(SH)ₖ, (2)
dans laquelle
Z est un groupe alkylene en C₁-C₂₀ qui peut être substitué par un élément choisi dans le groupe constitué par HSCH₂CH₂CH₂CH₂CH₂CH₂SH, HSCH₂CH₂OCH₂CH₂OCH₂CH₂SH, HSCH₂CH₂ (OH) CH₂ (OH) CH₂SH, CH₃CH₂C (CH₂OOCCH₂CH₂SH)₃, et C (CH₂OOCCH₂CH₂SH)₄, et dans lequel un atome d'oxygène, de soufre ou d'azote peut être inséré dans une liaison carbone-carbone de l'alkylène ; et
j et k sont chacun indépendamment un nombre entier de 1 à 3.

14. Procédé de préparation de la capsule polymère selon la revendication 8, le procédé comprenant :
la dissolution d'un dérivé de cucurbituril représenté par la formule 1 ci-dessous, d'un composé organique représenté par la formule 2 ci-dessous et d'une substance pharmacologiquement active dans un solvant organique pour obtenir une solution réactionnelle ;
la copolymérisation du dérivé de cucurbituril de formule 1 avec le composé organique de formule 2 dans la solution réactionnelle pour obtenir une capsule polymère encapsulant une substance pharmacologiquement active ; et
l'élimination d'un composé résiduel n'ayant pas réagi par dialyse : 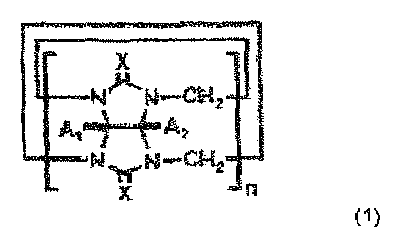 dans laquelle
au moins un ou tous les n A₁ et les n A₂ sont choisis dans le groupe constitué par un groupe hydroxy, un groupe methyloxy, un groupe butyloxy, un groupe dodécabutyloxy, un groupe propynyloxy, un groupe hydroxyéthyloxy, un groupe alkyloxycarbonyloxy en C₁-C₃₀, un groupe alkylcarbonyloxy en C₁-C₃₀, un groupe aminoalkyloxy en C₁-C₃₀, -OC(=O)CH₃, -OCH₂CH₂CH₂SCH₂COOH, -OCH₂CH₂CH₂SCH₂CH₂NH₂, et -OC(=O)CH₂CH₂CH₂CH₂CH₂CH₂CH₂CH₂CH₂CH₂CH₃, ou sont -O-A-CH=CH₂ où A est un groupe alkylène en C₁-C₂₀ dans lequel un atome d'oxygène, de soufre ou d'azote peut être inséré dans une liaison carbone-carbone de l'alkylène ;
X est O, S ou NH ; et
n est un nombre entier de 4 à 20, et
(HS)ⱼ-Z-(SH)ₖ, (2)
dans laquelle
Z est un groupe alkylene en C₁-C₂₀ qui peut être substitué par un élément choisi dans le groupe constitué par HSCH₂CH₂CH₂CH₂CH₂CH₂SH, HSCH₂CH₂OCH₂CH₂OCH₂CH₂SH, HSCH₂CH₂ (OH) CH₂ (OH) CH₂SH, CH₃CH₂C (CH₂OOCCH₂CH₂SH)₃, et C(CH₂OOCCH₂CH₂SH)₄, et dans lequel un atome d'oxygène, de soufre ou d'azote peut être inséré dans une liaison carbone-carbone de l'alkylène ; et
j et k sont chacun indépendamment un nombre entier de 1 à 3.

15. Procédé de préparation de la capsule polymère selon la revendication 9, le procédé comprenant :
la dissolution d'un dérivé de cucurbituril représenté par la formule 1 ci-dessous, d'un composé organique représenté par la formule 2 ci-dessous et d'une substance pharmacologiquement active dans un solvant organique pour obtenir une solution rédactionnelle ;
la copolymérisation du dérivé de cucurbituril de formule 1 avec le composé organique de formule 2 dans la solution rédactionnelle pour obtenir une solution contenant une capsule polymère encapsulant une substance pharmacologiquement active ;
l'ajout d'un composé de ciblage ou d'une solution contenant un composé de ciblage à la solution contenant la capsule polymère encapsulant une substance pharmacologiquement active afin que le composé de ciblage soit inclus dans une cavité intramoléculaire d'une partie du dérivé de cucurbituril constituant la capsule polymère ; et
l'élimination d'un composé résiduel n'ayant pas réagi par dialyse : 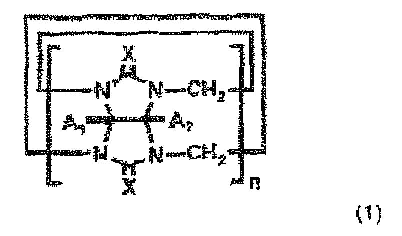 dans laquelle
au moins un ou tous les n A₁ et les n A₂ sont choisis dans le groupe constitué par un groupe hydroxy, un groupe méthyloxy, un groupe butyloxy, un groupe dodécabutyloxy, un groupe propynyloxy, un groupe hydroxyéthyloxy, un groupe alkyloxycarbonyloxy en C₁-C₃₀, un groupe alkylcarbonyloxy en C₁-C₃₀, un groupe aminoalkyloxy en C₁-C₃₀, -OC(=O)CH₃, -OCH₂CH₂CH₂SCH₂COOH, -OCH₂CH₂CH₂SCH₂CH₂NH₂, et -OC (=O) CH₂CH₂CH₂CH₂CH₂CH₂CH₂CH₂CH₂CH₂CH₃, ou sont -O-A-CH=CH₂ où A est un groupe alkylene en C₁-C₂₀ dans lequel un atome d'oxygène, de soufre ou d'azote peut être inséré dans une liaison carbone-carbone de l'alkylène ;
X est O, S ou NH ; et
n est un nombre entier de 4 à 20, et
(HS)ⱼ-Z-(SH)ₖ, (2)
dans laquelle
Z est un groupe alkylène en C₁-C₂₀ qui peut être substitué par un élément choisi dans le groupe constitué par HSCH₂CH₂CH₂CH₂CH₂CH₂SH, HSCH₂CH₂OCH₂CH₂OCH₂CH₂SH, HSCH₂CH₂ (OH) CH₂ (OH) CH₂SH, CH₃CH₂C(CH₂OOCCH₂CH₂SH)₃, et C(CH₂OOCCH₂CH₂SH)₄, et dans lequel un atome d'oxygène, de soufre ou d'azote peut être inséré dans une liaison carbone-carbone de l'alkylène ; et
j et k sont chacun indépendamment un nombre entier de 1 à 3.

16. Procédé selon l'une quelconque des revendications 12 à 15, dans lequel le solvant organique est choisi dans le groupe constitué par l'eau, le chloroforme, le méthanol, l'éthanol, le diméthylsulfoxyde, le dichlorométhane, le diméthylformamide, le tétrahydrofurane et une combinaison de ceux-ci.

17. Procédé selon l'une quelconque des revendications 12 à 15, dans lequel la copolymérisation du dérivé de cucurbituril de formule 1 avec le composé organique de formule 2 est réalisée par une irradiation UV.

18. Procédé selon la revendication 17, dans lequel, dans la copolymérisation du dérivé de cucurbituril de formule 1 avec le composé organique de formule 2, un initiateur radicalaire est ajouté à la solution réactionnelle avant l'irradiation UV.

19. Procédé selon la revendication 18, dans lequel l'initiateur radicalaire est choisi dans le groupe constitué par AIBN, K₂S₂O₈, (NH₄)₂S₂O₈, le peroxyde de benzoyle et une combinaison de ceux-ci.
